# FASCICULE DE BREVET EUROPEEN

(11) **EP 2 188 177 B1**
(45) Date de publication et mention de la délivrance du brevet: **06.07.2011**
(21) Numéro de dépôt: 08805587.6
(22) Date de dépôt: 19.05.2008
(51) Int. Cl.: B64D 29/06

(54) **FIXATION D'UNE STRUCTURE D'UNE NACELLE DE TURBOREACTEUR PAR BRIDE COUTEAU/GORGE RENFORCEE**
BEFESTIGUNG EINER TRIEBWERKSGONDELSTRUKTUR MITTELS EINER VERSTÄRKTEN MESSERSCHNEIDEN-RILLEN-KUPPLUNG
ATTACHMENT OF A JET ENGINE NACELLE STRUCTURE BY MEANS OF A REINFORCED KNIFE-EDGE/GROOVE COUPLING

(30) Priorité: 20.08.2007 FR 0705891
(43) Date de publication de la demande: 26.05.2010
(73) Titulaire: Aircelle, 76700 Gonfreville L'Orcher (FR)
(72) Inventeur: GERMAIN, Etienne, F-76620 Le Havre (FR); ELEGOËT, Jean-Yves, F-76440 Bennetot (FR); DHAINAULT, Patrice, F-76310 Ste Adresse (FR)
(74) Mandataire: Jouanneau, Lionel
(86) Numéro de dépôt international: PCT/FR2008/000691
(87) Numéro de publication internationale: WO 2009/024655

(56) Documents cités:
- EP-A- 0 453 360
- EP-A- 0 845 581
- GB-A- 2 384 827

## Description

La présente invention se apporte à une nacelle pour turboréacteur.

Un avion est mû par plusieurs turboréacteurs logés chacun dans une nacelle.

Une nacelle présente généralement une structure tubulaire comprenant une entrée d'air en amont du turboréacteur, une section médiane destinée à entourer une soufflante du turboréacteur, une section aval intégrant éventuellement des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Les parties de la section arrière qui sont maintenues fixes en vol, à savoir la structure interne mais également la structure externe de la section arrière sont généralement liées à la section médiane par l'intermédiaire d'un système de bridage de type couteau / gorge.

L'arrière-plan technologique est illustré par le document GB-A-2 384 827.

Ce type de bridage permet une tenue de la section arrière et une reprise des efforts longitudinaux tout en admettant un dégagement radial permettant facilement l'ouverture des structures externes et internes autour d'une ligne charnière à douze heures pour réaliser des opérations de maintenance à l'intérieur de la nacelle ou sur le turboréacteur. La fermeture en vol est assurée par des verrous à six heures.

L'architecture des inverseurs et des capots se présente généralement sous la forme d'éléments structurels discrets, tels que des poutres longitudinales, vérins, supportant et/ou actionnant des éléments non structurels continus tels que panneaux de carénage moteur acoustiques, panneaux mobiles d'inverseur, etc. De telles architectures conduisent à introduire des efforts très localisés sur certaines zones des brides gorge / couteau, notamment celles situées au niveau des poutres et autres éléments structurels.

Il a été constaté que sur les structures existantes, ces brides périphériques couteau / gorge ne sont pas adaptées à des structures présentant des passages d'efforts singuliers. Il s'ensuit une faible tolérance aux dommages. Par ailleurs, ces brides sont généralement réalisées en aluminium et sont simplement dimensionnées en termes de résistance à la fatigue et non en terme de dommages.

De plus, les brides sur les éléments ouvrants ne permettent pas la reprise des efforts circonférentiels puisque non axisymétriques.

La réalisation d'une bride entière en un matériau plus résistant est difficilement envisageable car aurait un impact négatif en terme de coût et de masse de l'ensemble propulsif.

La présente invention a ainsi notamment pour but de fournir une nacelle possédant une section arrière liée à la section médiane au moyen d'une bride de type couteau / gorge plus résistante mais n'entraînant pas une pénalisation lourde en termes de coût et/ou de masse de l'ensemble.

On atteint ce but de l'invention avec une nacelle pour turboréacteur comprenant une section avant d'entrée d'air, une section médiane destinée à entourer une soufflante de turboréacteur et une section arrière, au moins une partie constitutive de la section arrière étant liée à la section médiane par l'intermédiaire d'un couteau radial au moins partiellement périphérique apte à coopérer par complémentarité de forme avec une gorge correspondante présentée par une partie de la section médiane, caractérisée en ce que le couteau comprend au moins un segment de renfort situé au niveau d'une zone de réception d'efforts importants, ledit segment de renfort étant réalisé à partir d'une matière plus résistante que le reste du couteau et adaptée aux efforts devant être supportés par ledit segment en cette zone.

Ainsi, en prévoyant un couteau comprenant des segments de renforts, seules les zones soumises à des efforts plus intenses sont renforcées.

La réalisation du couteau à l'aide de segments de renfort permet de ne pas impacter de manière trop importante ni la masse de l'ensemble de la bride ni son coût, le recours à des matériaux plus résistants, et donc souvent plus lourds et plus chers ne s'effectuant qu'aux endroits où les efforts à supporter le rendent nécessaire.

Avantageusement, le segment de renfort comprend une pluralité de sous-segments. Une telle sous-segmentation répond à une approche par ségrégation des chemins d'efforts et rupture sure. Ainsi, si l'un des sous-segments venait à rompre pour cause de chocs, corrosion ou par fatigue suite à propagation de fissures, les autres sous-segments sont dimensionnés pour supporter les efforts.

De manière préférentielle, le couteau est réalisé principalement à base d'aluminium. L'aluminium répond aux exigences de coût et de masse pour la plus grande partie du couteau dans une nacelle selon l'invention.

Préférentiellement, les segments de renfort sont réalisés à partir de titane. Les alliages à base de titane possèdent de bon rapports solidité/poids pour l'application considérée.

Avantageusement, le segment de renfort est situé sensiblement au niveau d'une jonction avec une poutre longitudinale appartenant à la structure de la section arrière.

Avantageusement encore, un segment de renfort est situé sensiblement à douze heures et un segment de renfort est situé sensiblement à six heures. Il s'agit généralement de la zone de jonction avec le mât ou à une poutre proche du mât et donc soumise à d'importants efforts, ainsi qu'à la zone de jonction avec la poutre longitudinale inférieure sur laquelle les structures de la section arrière sont verrouillés.

Préférentiellement, la nacelle est destinée à un turboréacteur double flux et présente pour ce faire une section arrière comprenant une structure interne destinée à servir de carter à une partie arrière du turboréacteur et définissant avec une structure externe une veine de circulation d'un flux froid.

Selon une variante de réalisation, la structure interne est liée à la section médiane par l'intermédiaire de la liaison couteau.

Alternativement ou de manière complémentaire, la structure externe est liée à la section médiane par l'intermédiaire de la liaison couteau.

Selon un mode de réalisation particulier, la section arrière comprend des moyens d'inversion de poussée.

Avantageusement, la partie de la section arrière liée à la section médiane par l'intermédiaire de la liaison couteau est montée mobile de manière à pouvoir s'ouvrir latéralement selon une direction permettant le désengagement du couteau et de la gorge.

De manière préférentielle, les segments de renforts du couteau présentent au moins un chanfrein d'extrémité. Ainsi, la présence de chanfreins permet une réorientation des efforts s'exerçant très localement sur le segment de renfort. Il s'ensuit une meilleure répartition des efforts sur toute l'épaisseur et/ou la longueur du segment de renfort.

Préférentiellement, les chanfreins sont situés au niveau d'une jonction du segment de renfort ou d'un sous-segment avec le reste du couteau ou un sous-segment adjacent.

D'autres caractéristiques et avantages de la présente invention apparaîtront à la lumière de la description qui va suivre et à l'examen des figures annexées dans lesquelles :
- la figure 1 est une représentation schématique en coupe longitudinale d'une nacelle de turboréacteur double flux.
- la figure 2 est une représentation schématique en coupe transversale de la nacelle de la figure 1.

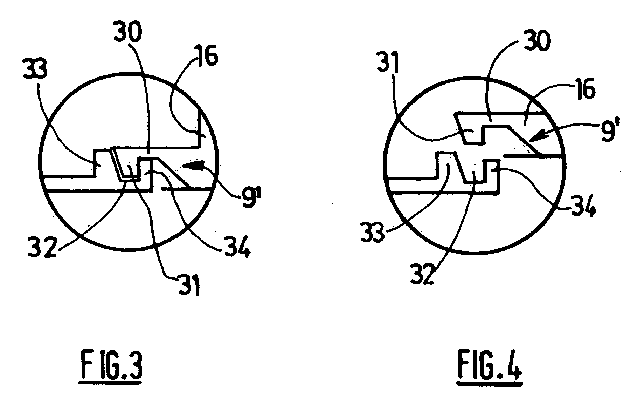

- les figures 3 et 4 sont des représentations schématiques d'un système couteau / gorge respectivement en position engagée et en position désengagée.
- la figure 5 est une représentation schématique d'un couteau présenté par une demi-partie de section arrière.
- la figure 6 est une représentation agrandie d'une partie inférieure du couteau représenté à la figure 5.

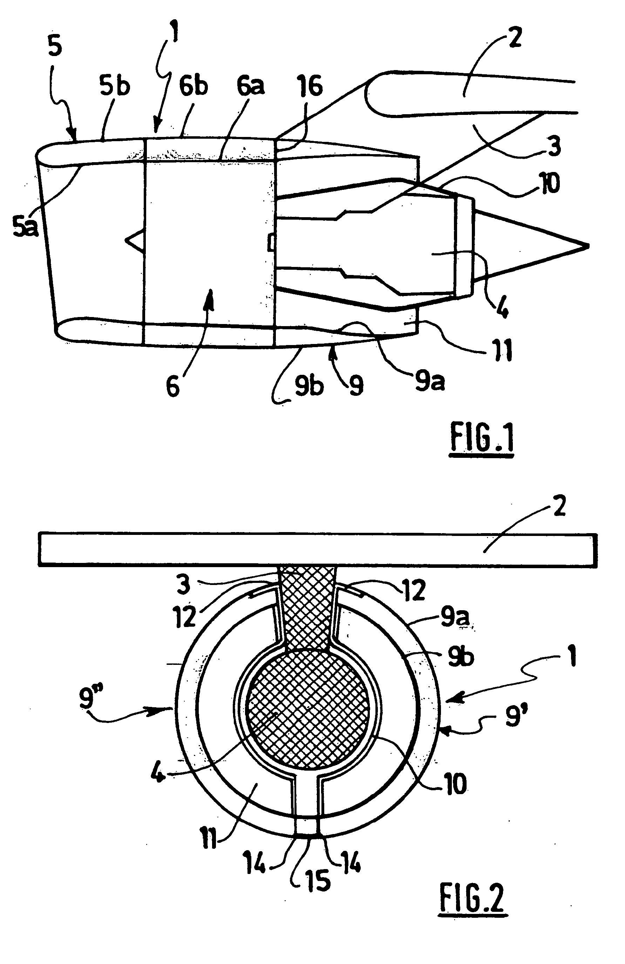

Une nacelle 1 selon l'invention telle que représentée sur les figures 1 et 2 est destinée à être rattachée sous une aile 2 d'un avion (non visible) par l'intermédiaire d'un mât 3 oblique orienté vers l'avant de l'avion.

Cette nacelle 1 constitue un logement tubulaire pour un turboréacteur 4 dont elle sert à canaliser les flux d'air qu'il génère. Elle abrite également différents composants nécessaires au fonctionnement du turboréacteur 4.

Plus précisément, la nacelle 1 possède une structure externe comprenant une section avant formant une entrée d'air 5, une section médiane 6 entourant une soufflante 7 du turboréacteur, et une section arrière 9 entourant le moteur et abritant éventuellement un système d'inversion de poussée (non visible).

La section médiane 6 comprend, d'une part, un carter 6a interne entourant la soufflante du turboréacteur 4, et d'autre part, une structure externe 6b de carénage du carter prolongeant une surface externe 5b de la section d'entrée d'air 5. Le carter 6a est rattaché à la section d'entrée d'air 5 qu'elle supporte et prolonge une surface interne 5a de cette dernière. La structure externe 6b de carénage est généralement réalisée sous la forme de capots mobiles situés de part et d'autre de la nacelle 1 par rapport à l'axe du mât 3 et se rejoignant sous la nacelle.

La section arrière 9 prolonge la section médiane 6 et comprend une structure externe présentant une surface interne 9a dans la continuité du carter 6a et une surface externe 9b dans la continuité de la structure externe 6b de carénage de la section médiane 6. Elle comprend également une structure interne 10 de carénage du moteur définissant avec la surface interne 9a une veine 11 destinée à la circulation d'un flux d'air froid dans le cas d'un turboréacteur double flux tel qu'ici représenté.

La section arrière 9 est réalisée sous la forme de deux demi-parties 9', 9" latérales situées de part et d'autre de la nacelle 1 apte à s'ouvrir pour permettre un accès au turboréacteur 4.

Chaque demi-partie 9', 9" comprend un bord supérieur 12 équipé de moyens d'attache (non visibles) au mât 3 du type verrous (pour une ouverture latérale) ou charnières (pour une ouverture radiale) et un bord inférieur 14 équipé de moyens de verrouillage 15 aptes à assurer la fermeture des deux demi-parties.

L'ensemble de la structure externe de la section arrière 9 et de la structure interne 10 de chaque demi-partie 9', 9" est supporté par un cadre avant 16 lui-même supporté par le carter 6a.

Afin d'assurer la tenue mécanique de l'ensemble de la nacelle ainsi que la transmission des efforts vers le mât 3, les demi-parties 9', 9" sont, par l'intermédiaire du cadre avant 16, équipées d'un système de verrouillage apte à coopérer avec des moyens de verrouillage complémentaires solidaires du carter 6a de la section médiane.

Ce système de verrouillage se présente sous la forme d'une bride groge / couteau, le couteau étant porté par le cadre avant 16 tandis que la gorge périphérique est présentée par le carter 6a.

Plus précisément, le cadre avant 16 de chaque demi-partie 9', 9" présente un prolongement 30 longitudinal terminé par un retour formant couteau 31 orienté radialement en direction du carter 6a.

Ce couteau 31 est destiné à coopérer avec une gorge 32 radiale de forme correspondante équipant le carter 6a et présentant une bordure externe 34 et une bordure interne 33.

De manière générale, la gorge 32 et le couteau 31 présentent chacun un profil en V complémentaire, la gorge étant communément désignée sous le terme « V-groove ».

Le système gorge / couteau présente l'avantage de conférer à l'ensemble une bonne tenue mécanique aux efforts longitudinaux lorsqu'il est engagé tout en en permettant un dégagement radial facile autorisant par conséquent une ouverture simple et rapide des demie-parties 9', 9".

Selon l'art antérieur, la gorge et le couteau sont réalisés à partir d'aluminium en un alliage présentant un bon compromis résistance / poids.

Toutefois, comme expliqué précédemment, les efforts les plus importants supportés et transmis par la bride sont localisés.

En effet, la structure externe de la section arrière comprend généralement une armature comportant une ou plusieurs poutres longitudinales et sur laquelle sont rapportés une paroi interne acoustique et une paroi externe aérodynamique.

Il s'ensuit que les efforts transmis à la bride sont logiquement localisés au niveau d'une jonction entre les poutres longitudinales et le cadre avant 16. On comptera généralement au minimum deux chemins d'efforts principaux, à savoir sensiblement à douze heure au niveau de poutres de liaison au mât 3 et à six heures au niveau d'une poutre longitudinale inférieure 37 supportant des moyens de verrouillage des deux demi-parties 9', 9".

On notera également qu'une ligne d'effort importante se situe le long de chaque actionneur équipant un système d'inversion de poussée.

Selon l'invention, le couteau équipant le cadre avant 16 de chaque demi-partie est non plus réalisé en une seule pièce en un unique alliage mais comprend des segments de renfort réalisés dans un matériau adapté aux efforts à supporter à l'endroit des segments de renforts.

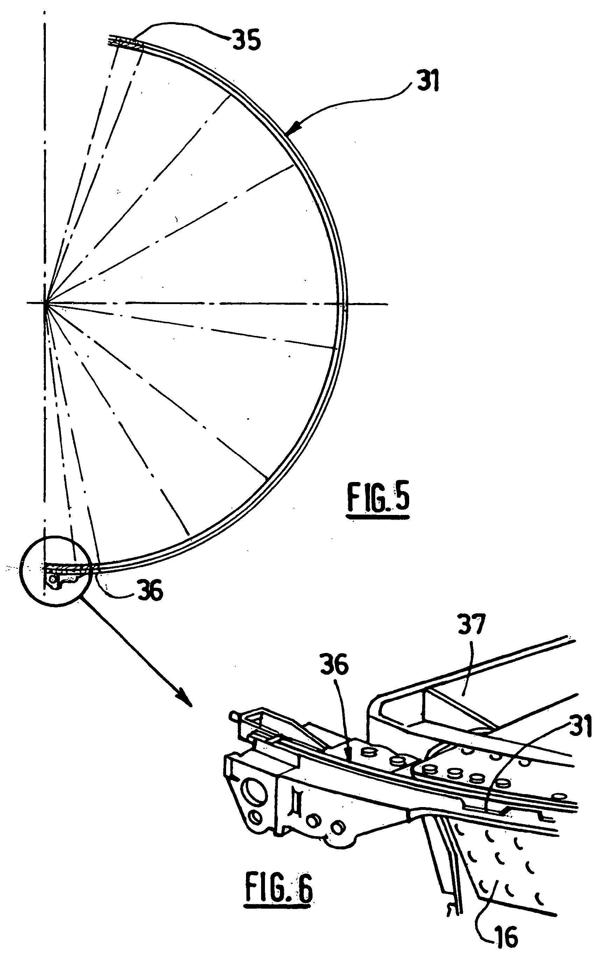

Un tel couteau est représenté sur la figure 5. Ce couteau décrit sensiblement un demi-cercle, à l'exception d'une zone supérieure correspondant à l'emplacement du mât 3. Comme expliqué précédemment, le couteau est majoritairement réalisé à partir d'un alliage d'aluminium.

Il comprend toutefois, un segment de renfort supérieur 35, situé à l'extrémité supérieure dudit couteau au voisinage du mât 3, et un segment de renfort inférieur 36, situé à l'extrémité inférieure au niveau de la poutre longitudinale inférieure 37 de verrouillage.

Chacun de ces segments de renforts 35, 36 est réalisé à partir d'un alliage à base de titane possédant une meilleure résistance aux efforts, plus en adéquation avec les efforts susceptibles d'être transmis à cet endroit du cadre avant 16.

Chaque segment de renfort 35, 36 est constitué de trois sous-segments (non visibles) qui permettent d'assurer une sécurité optimale, chaque sous-segment étant dimensionné pour pouvoir supporter les efforts exercés à cet endroit en cas de rupture d'au moins un des autres sous-segments. Il s'agit d'une approche par ségrégation des chemins d'efforts et rupture sûre. Par ailleurs, la division d'un segment de renfort en plusieurs sous-segments permet de limiter la propagation d'éventuelles fissures présentes dans un sous-segment à la suite d'un choc, par exemple.

La figure 6 présente une vue agrandie du segment de renfort 36 inférieur. On notera alors que le segment de renfort 36 présente un profil chanfreiné.

En effet, dans un même souci de mieux répartir les efforts longitudinaux s'exerçant sur le couteau 31, il a été constaté que la réalisation d'un chanfrein permet un écrêtage des pics d'efforts s'exerçant localement sur le segment de renfort et assure une meilleure répartition de ceux-ci sur toute l'épaisseur du couteau et toute la longueur des segments de renforts. Des chanfreins pourront également être réalisés entre chaque sous-segment de manière à éviter la présence de pics d'effort au niveau d'une jonction entre deux sous-segments ou avec le reste du couteau et conduire les efforts vers le centre du sous-segment ou segment de renfort.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

Notamment, on pourra noter que la présente invention a été décrite pour un système gorge / couteau entre la structure externe 9a, 9b et le carter 6a de soufflante. Il est bien évidemment possible d'appliquer le même type de liaison couteau / gorge, de manière alternative ou complémentaire à la structure interne 10 ou à l'accrochage d'une tuyère de flux froid dans le cas d'une nacelle longue dans une liaison mécanique avec un carter du turboréacteur situé au niveau de la soufflante. Ces liaisons sont distinctes et communément appelé gorge interne (« inner V-Groove ») et gorge externe (« outer V-Groove »).

## Revendications

1. Nacelle (1) pour turboréacteur (4) comprenant une section avant (5) d'entrée d'air, une section médiane (6) destinée à entourer une soufflante de turboréacteur et une section arrière (9), au moins une partie constitutive de la section arrière étant liée à la section médiane par l'intermédiaire d'un couteau (31) radial au moins partiellement périphérique apte à coopérer par complémentarité de forme avec une gorge (32) correspondante présentée par une partie (6a) de la section médiane, **caractérisée en ce que** le couteau comprend au moins un segment de renfort (35, 36) situé au niveau d'une zone de réception d'efforts importants, ledit segment de renfort étant réalisé à partir d'une matière plus résistante que le reste du couteau et adaptée aux efforts devant être supportés par ledit segment en cette zone.

2. Nacelle (1) pour turboréacteur (4) selon la revendication 1, **caractérisée en ce que** le segment de renfort (35, 36) comprend une pluralité de sous-segments.

3. Nacelle (1) pour turboréacteur (4) selon l'une quelconque des revendication 1 ou 2, **caractérisée en ce que** le couteau (31) est réalisé principalement à base d'aluminium.

4. Nacelle (1) pour turboréacteur (4) selon l'une quelconque des revendications 1 à 3, **caractérisée en ce que** les segments de renfort (35, 36) sont réalisés à partir de titane.

5. Nacelle (1) pour turboréacteur (4) selon l'une quelconque des revendications 1 à 4, **caractérisé en ce que** le segment de renfort (35, 36) est situé sensiblement au niveau d'une jonction avec une poutre longitudinale (37) appartenant à la structure de la section arrière (9).

6. Nacelle (1) selon l'une quelconque des revendications 1 à 5, **caractérisé en ce que** le couteau (31) comprend un segment de renfort (35) situé sensiblement à douze heure et un segment de renfort (36) situé sensiblement à six heure.

7. Nacelle (1) selon l'une quelconque des revendications 1 à 6, **caractérisée en ce qu'**elle est destinée à un turboréacteur (4) double flux et présente pour ce faire une section arrière (9) comprenant une structure interne (10) destinée à servir de carter à une partie arrière du turboréacteur et définissant avec une structure externe une veine (11) de circulation d'un flux froid.

8. Nacelle (1) selon la revendication 7, **caractérisée en ce que** la structure interne (10) est liée à la section médiane (6) par l'intermédiaire de la liaison couteau.

9. Nacelle (1) selon l'une quelconque des revendication 7 ou 8, **caractérisée en ce que** la structure externe (9) est liée à la section médiane (6) par l'intermédiaire de la liaison couteau.

10. Nacelle (1) selon l'une quelconque des revendications 1 à 9, **caractérisée en ce que** la section arrière (9) comprend des moyens d'inversion de poussée.

11. Nacelle (1) selon l'une quelconque des revendications 1 à 10, **caractérisée en ce que** la partie de la section arrière (9) liée à la section médiane (6) par l'intermédiaire de la liaison couteau est montée mobile de manière à pouvoir s'ouvrir latéralement selon une direction permettant le désengagement du couteau (31) et de la gorge (32).

12. Nacelle (1) selon l'une quelconque des revendications 1 à 11, **caractérisée en ce qu'**au moins les segments de renforts (35, 36) du couteau (31) présentent au moins un chanfrein d'extrémité.

13. Nacelle (1) selon la revendication 12, **caractérisé en ce que** les chanfreins sont situés au niveau d'une jonction du segment de renfort (35, 36) ou d'un sous-segment avec le reste du couteau (31) ou un sous-segment adjacent.

## Claims

1. A nacelle (1) for a jet engine (4) comprising a front air intake section (5), a middle section (6) intended to surround a jet engine fan and a rear section (9), at least one constituent part of the rear section being connected to the middle section by an at least partially peripheral radial knife-edge (31) able to collaborate, through complementary shapes, with a corresponding groove (32) exhibited by a part (6a) of the middle section, **characterized in that** the knife-edge comprises at least one reinforcing segment (35, 36) situated in a region that takes high loads, said reinforcing segment being made of a stronger material than the rest of the knife-edge and tailored to the loads that are to be borne by said segment in this region.

2. The nacelle (1) for a jet engine (4) as claimed in claim 1, **characterized in that** the reinforcing segment (35, 36) comprises a plurality of sub-segments.

3. The nacelle (1) for a jet engine (4) als claimed in either one of claims 1 and 2, **characterized in that** the knife-edge (31) is based mainly on aluminum.

4. The nacelle (1) four a jet engine (4) as claimed in any one of claims 1 to 3, **characterized in that** the reinforcing segments (35, 36) are made from titanium.

5. The nacelle (1) four a jet engine (4) as claimed in any one of claims 1 to 4, **characterized in that** the reinforcing segment (35, 36) is situated substantially at a join with a longitudinal beam (37) belonging to the structure of the rear section (9).

6. The nacelle (1) as claimed in any once of claims 1 to 5, **characterized in that** the knife-edge (31) comprises a reinforcing segment (35) situated substantially at twelve o'clock and a reinforcing segment (36) situated substantially at six o'clock.

7. The nacelle (1) as claimed in any one of claims 1 to 6, **characterized in that** it is intended for a bypass jet engine (4) and for this purpose has a rear section (9) comprising an inner structure (10) intended to act as a casing for a rear part of the jet engine and defining with an outer structure a flow path (11) four a cold flow.

8. The nacelle (1) as claimed on claim 7, **characterized in that** the inner structure (10) is connected to the middle section (6) by the knife-edge coupling.

9. The nacelle (1) as claimed in either one of claims 7 and 8, **characterized in that** the outer structure (9) is connected to the middle section (6) by the knife-edge coupling.

10. The nacelle (1) as claimed in any one of claims 1 to 9, **characterized in that** the rear section (9) comprises thrust-reversal means.

11. The nacelle (1) as claimed in any one of claims 1 to 10, **characterized in that** the part of the rear section (9) connected to the middle section (9) by the knife edge coupling is mounted such that it can move so that it can be opened laterally in a direction that allows the knife-edge (31) to disengage from the groove (32).

12. The nacelle (1) as claimed in any one of claims 1 to 11, **characterized in that** at least the reinforcing segments (35, 36) of the knife edge (31) have at least one end chamfer.

13. The nacelle (1) was claimed in claim 12, **characterized in that** the chamfers are situated at a junction between the reinforcing segment (35, 36) or sub-segment ant the remainder of the knife-edge (31) or an adjacent sub-segment.

## Patentansprüche

1. Rumpf (1) für Turbotriebwerk (4), der einen vorderen Lufteintritts-Abschnitt (5), einen mittleren Abschnitt (6), der dazu bestimmt ist, ein Turbotriebwerksgebläse zu umschließen und einen hinteren Abschnitt (9) umfasst, wobei mindestens ein Bestandteil des hinteren Abschnitts mit dem mittleren Abschnitt über eine radiale, zumindest teilweise periphere Messerschneide (31) verbunden ist, die imstande ist, durch Formkomplementarität mit einer entsprechenden Nut (32) zusammenzuarbeiten, die ein Teil (6a) des mittleren Abschnitts aufweist, **dadurch gekennzeichnet, dass** die Messerschneide mindestens ein Verstärkungssegment (35, 36) umfasst, das sich auf Ebene eines Aufnahmebereichs umfassender Beanspruchungen befindet, wobei das Verstärkungssegment aus einem solideren Werkstoff hergestellt ist als der Rest der Messerschneide und für die Beanspruchungen geeignet ist, die von dem Segment in diesem Bereich bewältigt werden müssen.

2. Rumpf (1) für Turbotriebwerk (4) nach Anspruch 1 , **dadurch gekennzeichnet, dass** das Verstärkungssegment (35, 36) eine Vielzahl von Untersegmenten umfasst.

3. Rumpf (1) für Turbotriebwerk (4) nach einem der Ansprüche 1 oder 2, **dadurch gekennzeichnet, dass** die Messerschneide (31) im Wesentlichen auf der Basis von Aluminium hergestellt ist.

4. Rumpf (1) für Turbotriebwerk (4) nach einem der Ansprüche 1 bis 3, **dadurch gekennzeichnet, dass** die Verstärkungssegmente (35, 36) aus Titan hergestellt sind.

5. Rumpf (1) für Turbotriebwerk (4) nach einem der Ansprüche 1 bis 4, **dadurch gekennzeichnet, dass** sich das Verstärkungssegment (35, 36) etwa auf Ebene einer Verbindung mit einem Längsträger (37) befindet, der zur Struktur des hinteren Abschnitts (9) gehört.

6. Rumpf (1) nach einem der Ansprüche 1 bis 5, **dadurch gekennzeichnet, dass** die Messerschneide (31) ein Verstärkungssegment (35) umfasst, das sich bei etwa zwölf Uhr befindet, und ein Verstärkungssegment (36), das sich bei etwa sechs Uhr befindet.

7. Rumpf (1) nach einem der Ansprüche 1 bis 6, **dadurch gekennzeichnet, dass** er für ein Turbofantriebwerk (4) bestimmt ist und dafür einen hinteren Abschnitt (9) aufweist, der eine innere Struktur (10) umfasst, die dazu bestimmt ist, als Gehäuse für einen hinteren Teil des Turbotriebwerks zu dienen und mit einer äußeren Struktur eine Zirkulationsader (11) eines Kaltluftstroms definiert.

8. Rumpf (1) nach Anspruch 7, **dadurch gekennzeichnet, dass** die innere Struktur (10) mit dem mittleren Abschnitt (6) über die Messerschneideverbindung verbunden ist.

9. Rumpf (1) nach einem der Ansprüche 7 oder 8, **dadurch gekennzeichnet, dass** die äußere Struktur (9) mit dem mittleren Abschnitt (6) über die Messerschneideverbindung verbunden ist.

10. Rumpf (1) nach einem der Ansprüche 1 bis 9, **dadurch gekennzeichnet, dass** der hintere Abschnitt (9) Schubumkehrmittel umfasst.

11. Rumpf (1) nach einem der Ansprüche 1 oder 10, **dadurch gekennzeichnet, dass** der über die Messerschneideverbindung mit dem mittleren Abschnitt (6) verbundene Teil des hinteren Abschnitts (9) derart bewegbar montiert ist, dass er sich seitlich gemäß einer Richtung öffnen kann, was das Loslösen der Messerschneide (31) und der Nut (32) erlaubt.

12. Rumpf (1) nach einem der Ansprüche 1 bis 11, **dadurch gekennzeichnet, dass** zumindest die Verstärkungssegmente (35, 36) der Messerschneide (31) mindestens eine Endschräge aufweisen.

13. Rumpf (1) nach Anspruch 12, **dadurch gekennzeichnet, dass** sich die Endschrägen auf Ebene einer Verbindung des Verstärkungssegments (35, 36) oder eines Untersegments mit dem Rest der Messerschneide (31) oder einem benachbarten Untersegment befinden.
